Europäisches Patentamt

(19) European Patent Office

Office européen des brevets

(11) Publication number: **0 068 886**
**B1**

(12) # EUROPEAN PATENT SPECIFICATION

(45) Date of publication of patent specification: **30.04.86**

(21) Application number: **82303403.8**

(22) Date of filing: **29.06.82**

(51) Int. Cl.⁴: **B 65 G 13/071, B 65 G 13/04**

(54) **Drive transmission for roller conveyors.**

(30) Priority: **29.06.81 US 278630**

(43) Date of publication of application:
**05.01.83 Bulletin 83/01**

(45) Publication of the grant of the patent:
**30.04.86 Bulletin 86/18**

(84) Designated Contracting States:
**DE FR GB IT NL**

(56) References cited:
**US-A-3 189 161**
**US-A-3 581 875**
**US-A-4 074 805**

(73) Proprietor: **LEAR SIEGLER, INC.**
**507 Plymouth Avenue North East**
**Grand Rapids Michigan (US)**

(72) Inventor: **White, Oscar Mac**
**1501 32nd Street South West**
**Wyoning Michigan (US)**
Inventor: **Brouwer, Gerald Allan**
**4210 Pineview South West**
**Grandville Michigan (US)**

(74) Representative: **Robinson, Anthony John**
**Metcalf et al**
**Kilburn & Strode 30 John Street**
**London, WC1N 2DD (GB)**

Courier Press, Leamington Spa, England.

## Description

The present invention relates generally to driven roller conveyors, and particularly to an improved drive transmission element, and an improved drive transmission assembly incorporating such element for a chain-driven roller conveyor.

Chain-driven roller conveyors comprise an array of freely rotatable rollers defining the roller conveyor surface, which rollers are all driven to rotate by surface-contact with drive transmission elements carried by an endless drive transmission chain. Over the years, various combinations of chain and drive transmission elements in the form of rubber or plastics pads or belts have been devised and used in the conveyor field. These have included devices in which the drive transmission element or high friction member is a continuous band, similar to a belt, which is mounted on the chain. Other devices include elements in the form of individual pads each mounted on a respective link of the chain, or pads of greater length designed to overlay a number of adjacent links of the chain. Examples of these types of construction are found in patents such as United States patent No. 2 792 928 entitled "Attachment Clip For Lumber Conveyor Chains", United States patent No. 3 189 161 entitled "Powered Roller Curve", United States patent No. 3 306 430 entitled "Belt-Chain Combination Drive", and United States patent No. 4 074 805 entitled "Installaton Equipment With A Driving Mechanism".

While each of the constructions disclosed in the above United States patents has various merits, the combinations have not been entirely satisfactory, and although they have provided the advantage of the strength of a chain and the high frictional characteristics of the rubber or plastics pad, they have failed to solve the problem of excessive noise. They have also failed to solve the problem of quick and inexpensive replacement when sections of the drive transmission element or pad are damaged, lost or become excessively worn.

Chain stretch has also been a problem where long pads were utilized as drive transmission elements spanning a number of links of the chain because, when the drive chain stretched, the drive transmission elements did not stretch to the same extent and thus there was a tendency for the drive transmission elements to pull loose from the chain after a certain operating time had elapsed. Another problem encountered with long drive transmission elements is the local stretching of the elements as the chain passes around the drive sprockets or guide pulleys due to the increase in path length for for the elements because the radius of their path of travel is greater than that of the chain. This alternative stretching and contracting not only materially increases wear of the elements, it also causes the elements to pull free from the chain.

Despite these shortcomings, the advantage of this type of combination for drive transmission to the rollers has been recognized and as a result has been extensively used.

The present invention seeks to provide a drive transmission element, and a drive transmission assembly incorporating such element, which will not be subjected to disadvantageous wear problems upon chain stretch, and which, moreover, will be able to provide the advantage of quieter operation than prior art structures.

According to one aspect of the present invention a drive transmission element for attachment to a drive chain of a roller conveyor to transmit drive from the chain to the rollers of the conveyor by contacting the curved surfaces of the rollers, has a body having a generally flat drive transmission face and a mounting stem projecting from the body away from the drive transmission face and shaped to cooperate with the chain to attach the element to one link thereof, the said drive transmission face having a shape bounded at the sides by edges extending substantially parallel to a longitudinal axis of the element, as known from US—A—3 184 161, the element characterised in that the elements at their ends are bounded by edges inclined at an acute angle to the said longitudinal axis with ends of adjacent elements extending in a side by side relationship lengthwise of the drive chain, the element being integrally moulded of resiliently flexible material having a high coefficient of friction with the rollers of the rolling conveyor.

Thus, when such drive transmission elements are attached to a chain and moved beneath the rollers of a roller conveyor, the transition from contact of a roller with one element to contact with another element is gradual and there is no abrupt or sudden transfer to produce either noise or interruption or variation in the motion transmitted to the roller. This constitutes a considerable advantage over the prior art systems.

To assist mounting the element to a drive chain the end of the mounting stem is bifurcated to form a pair of fingers extending divergently from each other parallel to the longitudinal axis of the element for gripping the chain of the roller conveyor. Also it is preferred that the said drive transmission face has end portions which are convexly curved. This feature reduces the projection of the ends of the element from the general line of the chain as it passes over end sprockets or pulleys.

The present invention also comprehends a drive transmission assembly for a roller conveyor comprising a drive chain having a plurality of a drive transmission elements attached thereto for contacting the rollers of the roller conveyor, each drive transmission element being attached to a respective link of the chain and characterised in that each drive transmission element extends lengthwise of the chain beyond the end of the chain link to which it is attached, with the line of separation between adjacent drive transmission elements extending at an acute angle to the length of the chain.

The invention may be put into practice in various different ways, but one embodiment of the invention will now be more particularly described with reference to the accompanying drawings, in which:

Figure 1 is a fragmentary longitudinal sectional view of a roller conveyor equipped with drive transmission elements in accordance with the principles of the present invention;

Figure 2 is a plan view on an enlarged scale of a part of the roller drive assembly of the roller conveyor of Figure 1;

Figure 3 is a side view, on an enlarged scale, of a part of the roller drive assembly of the conveyor of Figure 1;

Figure 4 is a cross sectional view taken on the line IV—IV of Figure 3 showing a drive transmission element located within a supporting channel;

Figure 5 is a side view of a drive transmission element constituting an embodiment of the present invention;

Figure 6 is a plan view of the drive transmission element of Figure 5; and

Figure 7 is an end view of the drive transmission element illustrated in Figures 5 and 6.

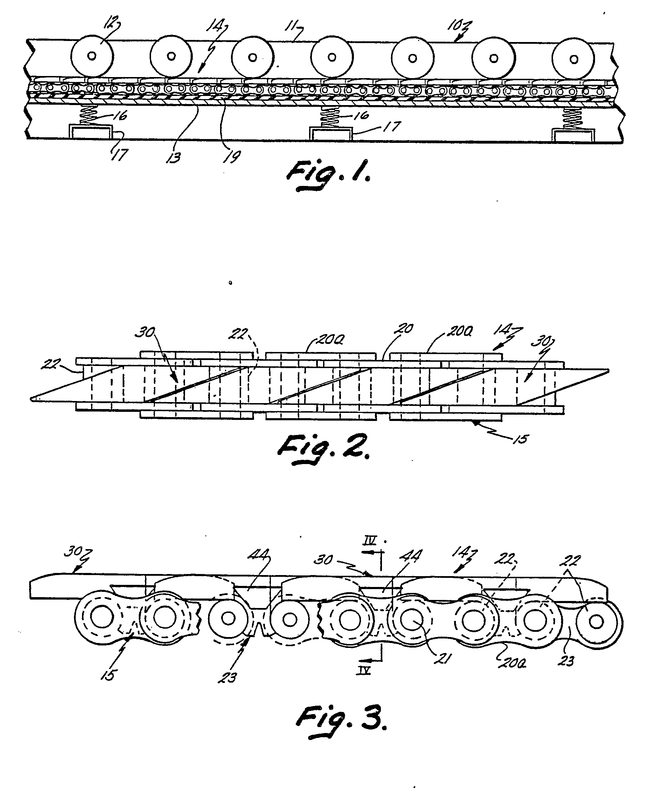

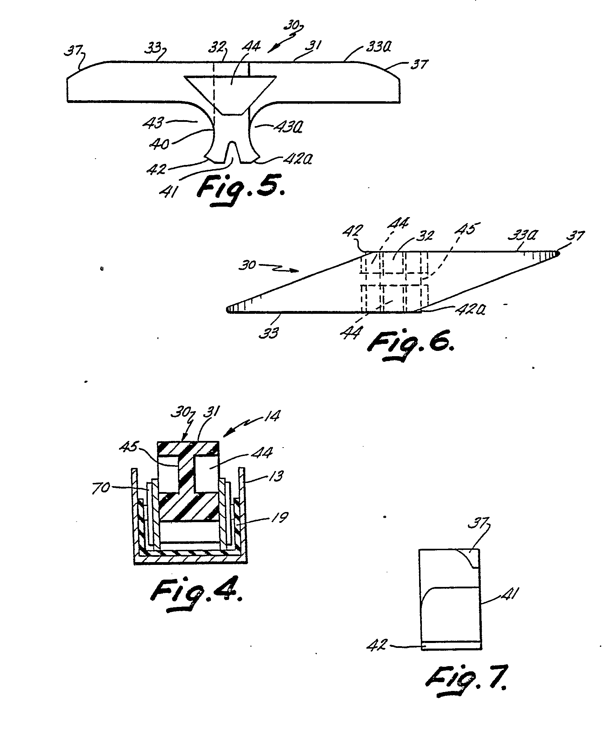

Referring now to the drawings, the numeral 10 generally indicates a roller conveyor having sides 11 between which are rotatably mounted a plurality of rollers 12 on which articles to be conveyed are supported and moved by the rotation of the rollers, which rotation is imparted to the rollers 12 by an underlying roller drive transmission assembly 14 which is housed in an elongate channel housing 13 providing guidance and support for the roller drive transmission assembly 14 (Figures 1 and 4). The channel 13 has a liner 19 to provide a wear resistant, low friction surface for guiding and supporting the moving members of the roller drive transmission assembly 14. This channel 13, and thus the roller drive transmission assembly 14 can be supported in any suitable manner, such as by the springs 16 shown in Figure 1 which rest on crosspieces 17 of a conveyor frame (not shown). All of the structure described so far is conventional in the roller conveyor art.

As best seen in Figures 2 and 3, the roller drive transmission assembly 14 includes a chain 15 of conventional construction consisting of pairs of side plates forming links 20 and pairs of side plates forming links 20a pivotally joined together by pins 21 surrounded by roller sleeves 22. Between each pair of side plates constituting one of the links 20 or 20a and between adjacent roller sleeves 22 defining the opposite ends of that link is a waisted opening 23 as seen in side view (see Figure 3). This type of chain is conventional and has been used for many years in the conveyor industry: lighter duty chains of this type are also used as bicycle chains.

Mounted on the chain 15 are a plurality of drive transmission elements 30. Each element 30 comprises a body, including a central body portion 32 and a pair of end portions 33 and 33a (Figure 5).

The central body portion 32 extends the full width of the waisted opening 23 between a pair of the side plates forming one of the links 20a and also the length of the opening 23 which corresponds substantially to the spacing between a pair of the roller sleeves 22. Each of the end portions 33, 33a, extends lengthwise of the chain sufficiently to overly the whole of the link to which the drive transmission element 30 is attached and to overlap all or almost all of the next adjacent link on the chain.

Each of the end portions 33 and 33a has one side extending substantially parallel to the longitudinal axis of the body 31, which is parallel to the length of the chain, and the other side inclined at an acute angle to the longitudinal axis of the element 30 so that each end gradually tapers to a point lengthwise of the chain. Opposite ends of the same element 30 are tapered on opposite sides so that the vertical planes in which the inclined sides of all the elements lie are parallel. Thus the top face 31 of this element 30 has the shape of an oblique parallelogram. This top face 31 of the drive transmission element 30 is flat except at the very ends of the end portions 33, 33a which are convexly curved at 37 to reduce the problem of the end projecting out from the general surface of the roller drive transmission assembly as the link carrying each particular drive transmission element passes over the pulleys at the end of each run.

Projecting from beneath the central body portion 32 of each drive transmission element 30 is an anchor member or stem 40. The stem 40 is of the full width of the drive transmission element 30 and its lower end is bifurcated at 41 to form a pair of fingers 42 and 42a. The fingers diverge away from one another parallel to the longitudinal axis of the drive transmission element 30 to define recesses 43 and 43a on opposite sides of the anchor member 40. The recesses 43 and 43a are of such a size and shape as to receive the roller sleeves 22 at the ends of the chain link to which the drive transmission element 30 is secured.

It will be noted that the bifurcation slot 41 separating the fingers 42 and 42a is V-shape. This facilitates the flexing of the fingers 42 and 42a to squeeze these together when the stem is inserted through the opening 23 in one of the chain links.

The central body portion 32 also a pair of blind openings 44, one on each side. The combined depths of the openings 44 is less than the width of the drive transmission element 30 itself leaving a longitudinal central web 45. These openings facilitate moulding of the element by helping to control shrinkage which produces sink marks in the surface due to differentials in shrinkage between sections of substantially different thickness. The central web 45 provides continuous longitudinal support for the drive transmission face.

The drive transmission element 30 is preferably moulded from a material having high resistance to scuff and wear and a high coefficient of friction. The material must also have at least a limited degree of resilience to permit it to cooperate with the chain and also to permit it to be installed on the chain. A preferred material for the manufacture of the elements 30 is a mouldable urethane, for example, the urethane marketed by F.I. Dupont de Nemors under the trademark "Hytrel".

It will be recognized that a drive transmission assembly incorporating the above-described drive transmission elements provides an effectively continuous drive surface for each individual driven roller of the roller conveyor. As a drive transmission element passes a roller it gradually takes over the drive transmission from the previous element due to the inclined line of separation between adjacent elements. Thus, there is nothing to bounce or vibrate the roller and its movement is continuous; the noise generated by prior art systems having separation lines between adjacent drive transmission elements which are substantially perpendicular to the length of the drive chain is substantially eliminated. This makes it practical to utilize transmission elements of short length. This is particularly desirable because such elements are easier and simpler to install and do not have a tendency to separate from the chain as this latter passes around the drive sprockets or pulleys. Also, as normally occurs with any chain, there is, over a period of time, a stretching of the chain due to wear and other factors. Since each drive transmission element is secured to one link only this stretching of the chain has no adverse affect upon the elements. Even if such chain stretch causes some increase in the gap between adjacent drive transmission elements, this will not cause trouble because the long overlap between the elements will prevent any increase in noise or change in roller operational characteristics.

The arrangement is also particularly desirable because it renders immaterial the length of the chain since the drive transmission elements are installed one by one. It is also true that the drive transmission elements can be quickly, easily and relatively inexpensively replaced as needed.

**Claims**

1. A drive transmission element (30) for attachment to a drive chain (15) of a roller conveyor (10) to transmit drive from the chain (15) to the rollers (12) of the conveyor by contacting the curved surfaces of the roller (12), the body (32, 33, 33a) of the element (30) having a generally flat drive transmission face (31) and a mounting stem (40) projecting from the body (32, 33, 33a) away from the drive transmission face (31) and shaped to cooperate with the chain (15) to attach the element (30) to one link thereof, the said drive transmission face (31) having a shape bounded at the sides by edges extending substantially parallel to a lonigitudinal axis of the element (30) the element characterised in that the elements at their ends are bounded by edges inclined at an acute angle to the said longitudinal axis with ends of adjacent elements extending in a side by side relationship lengthwise of the drive chain, the element (30) being integrally moulded of resiliently flexible material having a high coefficient of friction with the rollers of the roller conveyor.

2. A drive transmission element according to Claim 1, characterised in that the end of the mounting stem (40) is bifurcated to form a pair of fingers (42, 42a) extending divergently from each other parallel to the longitudinal axis of the element (30) for gripping the chain (15) of the roller conveyor.

3. A drive transmission element according to Claim 1, or Claim 2, characterised in that the said drive transmission face (31) has end portions (37) which are convexly curved .

4. A drive transmission element according to any of Claims 1 to 3, further characterised in that the said body (32, 33, 33a) of the element (30) has a pair of blind openings (44) therein between opposite end portions of the body (33, 33a) adjacent the junction of the body (32) and the said mounting stem (40), these openings being separated from one another by a web (45) extending substantially parallel to the said longitudinal axis of the element (30).

5. A drive transmission element according to Claim 4, characterised in that the said blind openings (44) are trapezoidal in shape.

6. A roller conveyor drive transmission assembly comprising a drive chain (15) having a plurality of drive transmission elements (30) attached thereto for contacting the rollers (12) of the roller conveyor, each drive transmission element (30) being attached to a respective link of the chain (15) and characterised in that each drive transmission element (30) extends lengthwise of the chain (15) beyond the ends of the link thereof to which it is attached, with the line of separation between adjacent drive transmission elements (30) extending at an acute angle to the length of the chain (15).

7. A roller conveyor drive transmission assembly according to Claim 6, characterised in that each drive transmission element (30) has an anchor member (40) intermediate its ends for securing it to the said chain (15).

8. A roller conveyor drive transmission assembly according to Claim 6 or Claim 7, characterised in that each end of each of the said drive transmission elements (30) has a convexly curved end portion (37).

9. A roller conveyor drive transmission assembly according to Claim 7 or Claim 8, characterised in that each anchor member (40) projects partially through the said chain (15) and has a bifurcated end forming a pair of fingers (42, 42a) which resiliently seat around portions of the said chain (15).

10. A roller conveyor drive transmission assembly according to any of Claims 6 to 8, characterised in that each of the links of the chain (15) has a transverse roller sleeve (22) at each end with an opening (23) therebetween, and each of the anchor members (40) extends through a respective said opening (23) and has a bifurcated end forming a pair of oppositely extending fingers (42, 42a), the said stem (40) being of a resilient material allowing the said fingers (42, 42a) to be flexed towards one another to pass through the opening.

11. A roller conveyor drive transmission assembly according to any of Claims 6 to 10, characterised in that each drive transmission element (20) has a high friction driving surface (32) for contacting the rollers (12) of the roller conveyor (10), this surface (32) being of oblique parallelogram shape, oriented so that adjacent elements (30) overlap one another lengthwise of the chain (15).

12. A roller conveyor drive assembly according to any of Claims 7 to 11, characterised in that the anchor member (40) of each said element (30) is a mounting stem for insertion through a central opening in a link of the chain (15) each of the drive transmission elements (30) having a pair of laterally extending openings (44) therein between the ends of the element (30) and adjacent the junction of the body (32) and the said mounting stem (40), the said openings being blind and forming between them a longitudinally extending web (45) for supporting the driving surface (31) of the pad.

## Patentansprüche

1. Element (30) zur Antriebsübertragung, das an einer Antriebskette (15) eines Walzenförderers (10) befestigbar ist, um den Antrieb der Kette (15) dadurch auf die Walzen (12) zu übertragen daß das Element (30) an den gekrümmten Fläche der Walzen (12) anliegt, wobei der Körper (32, 33a) des Elements (30) eine im wesentlichen ebene Antriebsübertragungsfläche (31) und einen Befestigungsfuß (40) aufweist, der vom Körper (32, 33, 33a), sich von der Antriebsübertragungsfläche (31) weg erstreckend, hervorsteht, und derart ausgestaltet ist, daß er mit der Kette (15) zum Befestigen des Elements (30) an einem deren Glieder zusammenwirkt, wobei die Antriebsübertragungsfläche (31) an den Seiten von Rändern begrenzt wird, die sich im wesentlichen parallel zur Längsachse des Elements (30) erstrecken, dadurch gekennzeicht, daß die Elemente an Ihren Enden von Rändern begrenzt sind, die in einem spitzen Winkel zur Längsachse ausgerichtet sind, wobei die Enden benachbarter Elemente längs der Antriebskette nebeneinander angeordnet sind und wobei das Element (30) einstückig aus einem elastisch federnden Material mit einem hohen Reibungskoeffizient bezüglich der Walzen eines Walzenförderers ausgebildet ist.

2. Element zur Antriebsübertragung nach Anspruch 1, dadurch gekennzeichnet, daß das Ende des Befestigungsfußes (40) aufgespalten ist, um ein Paar Finger (42, 42a) zu bilden, die sich parallel zur Längsachse des Elementes (30), voneinander divergierend, erstrecken, um in die Kette (15) des Walzenförderers einzugreifen.

3. Element zur Antriebsübertragung nach Anspruch 1 oder 2, dadurch gekennzeichnet, daß die Antriebsübertragungsfläche (31) Endbereiche (37) aufweist, die konvex gekrümmt sind.

4. Element zur Antriebsübertragung nach einem der Ansprüche 1—3, dadurch gekennzeichnet, daß im Körper (32, 33, 33a) des Elements (30) ein Paar von Sacklöchern (44) ausgebildet sind, die zwischen sich gegenüberliegenden Endbereichen des Körpers (33, 33a), der Verbindungsstelle des Körpers (32) mit dem Befestigungsfuß (40) benachbart, angeordnet sind, wobei diese Löcher durch einen Mittelsteg (45) voneinander getrennt sind, der sich im wesentlichen parallel zur Längsachse des Elementes (30) erstreckt.

5. Element zur Antriebsübertragung nach Anspruch 4, dadurch gekennzeichnet, daß die Sacklöcher (44) trapezoid ausgebildet sind.

6. Vorrichtung zur Übertragung eines Walzenantriebs mit einer Antriebskette (15), an der meherer Elemente (30) zur Antriebsübertragung befestigt sind, die an den Walzen (12) des Walzenförderes anliegen, wobei jedes Element (30) zur Antriebsübertragung an einem jeweiligen Glied der Kette (15) befestigt ist, dadurch gekennzeichnet, daß jedes Element (30) zur Antriebsübertragung sich in Längsrichtung der Kette (15) über die Enden der Glieder, an denen es befestigt ist, hinaus erstreckt, wobei sich die Trennungslinie zwischen zwei benachbarten Elementen (30) zur Antriebsübertragung in spitzem Winkel zur Längsrichtung der Kette (15) erstreckt.

7. Vorrichtung zur Übertragung eines Walzenantriebs nach Anspruch 6, dadurch gekennzeichnet, daß jedes Element (30) zur Antriebsübertragung zwischen seinen jeweiligen Enden ein Fußelement (40) aufweist, mit dem es an der Kette (15) befestigt wird.

8. Vorrichtung zur Übertragung eines Walzenantriebs nach Anspruch 6 oder 7, dadurch gekennzeichnet, daß jedes Ende jedes der Elemente (30) zur Antriebsübertragung einen konvex gekrümmten Endbereich (37) aufweist.

9. Vorrichtung zur Übertragung eines Walzenantriebs nach Anspruch 7 oder 8, dadurch gekennzeichnet, daß jedes Fußelement (40) sich teilweise durch die Kette (15) hindurch erstreckt und ein aufgespaltenes Ende aufweist, das ein Paar Finger (42, 42a) bildet, die federnd an Bereichen der Kette (15) anliegen.

10. Vorrichtung zur Übertragung eines Walzenantriebs nach einem der Ansprüche 6—9, dadurch gekennzeichnet, daß jedes Glied der Kette (15) an jedem seiner Enden eine querverlaufende Walzenhülse (22) mit einer dazwischen liegenden Öffnung (23) aufweist, wobei jedes der Fußelemente (40) sich durch eine jeweilige Öffnung (23) hindurch erstreckt und ein aufgespaltenes Ende aufweist, das ein Paar sich entgegengesetzt erstreckender Finger (42, 42a) bildet, wobei der Fuß (40) aus einem federnden Material besteht, so daß die Finger (42, 42a) zum Durchstecken durch die Öffnung federnd aufeinander zu drückbar sind.

11. Vorrichtung zur Übertragung eines Walsenantriebs nach einem der Ansprüche 6—10, dadurch gekennzeichnet, daß jedes Element (30) zur Antriebsübertragung eine Antriebsfläche (31) mit hohem Reibungskoeffizienten zum Anliegen an den Walzen (12) des Walzenförderers (10) aufweist, wobei diese Fläche (31) die Form eines schrägen Parallelogramms aufweist, das derart ausgerichtet ist, daß benachbarte Elemente (30) sich in Längsrichtung der Kette (15) überlappen.

12. Vorrichtung zur Übertragung eines Walzenantriebs nach einem der Ansprüche 7—11, dadurch gekennzeichnet, daß das Fußelement (40) jedes Elementes (30) ein Befestigungsfuß zum Einsetzen durch eine Mittelöffnung eines Gliedes der Kette (15) darstellt, wobei jedes der Elemente (30) zur Antriebsübertragung ein Paar sich seitlich erstreckender Öffnungen (44) in sich aufweist, jeweils zwischen den Enden des Elementes (30) und der Verbindungsstelle des Körpers (32) mit dem Befestigungsfuß (40) benachbart, wobei die Öffnungen Sacköffnungen sind und zwischen sich einen in Längsrichtung erstreckenden Steg (45) aufweisen, zum Tragen der Antriebsfläche (31) des Antriebselementes.

**Revendications**

1. Elément de transmission d'entraînement (30) destiné à être monté sur chaîne d'entraînement (15) d'un convoyeur à rouleaux (10) afin de transmettre l'entraînement de la chaîne (15) aux rouleaux (12) du convoyeur par mise en contact avec les surfaces courbes des rouleaux (12), le corps (32, 33, 33a) de l'élément (30) possédant une face de transmission d'entraînement de forme générale plane (31) et une tige de montage (40) faisant saillie à partir du corps (32, 33, 33a) en s'éloignant la face (31) de transmission d'entraînement et conformée de manière à coopérer avec la chaîne (15) pour monter l'élément (30) sur un maillon de la chaîne, ladite face de transmission d'entraînement (31) ayant une forme délimitée sur ses côtés par des bords s'étendant essentiellement parallèlement à l'axe longitudinal de l'élément (30), l'élément étant caractérisé en ce que les éléments sont délimités, au à leurs extrémités par des bords inclinés d'un angle aigu par rapport audit axe longitudinal, tandis que les extrémités d'éléments voisins s'étendent côte-à-côte dans le sens de la longueur de la chaîne d'entraînement, l'élément (30) étant moulé d'un seul tenant en un matériau souple élastique possédant un coefficient de frottement élevé avec les rouleaux du convoyeur à rouleaux.

2. Elément de transmission d'entraînement selon la revendication 1, caractérisé en ce que l'extrémité de la tige de montage (40) est en forme de fourche de manière à former une paire de doigts (42, 42a) s'étendant de façon divergente l'un par rapport à l'autre parallèlement à l'axe longitudinal de l'élément (30), pour agripper la chaîne (15) du convoyeur à rouleaux.

3. Elément de transmission d'entraînement selon la revendication 1 ou 2, caractérisé en ce que ladite face de transmission d'entraînement (31) possède des parties terminales (37) qui sont courbées de façon convexe.

4. Elément de transmission d'entraînement selon l'une quelconque des revendications 1 à 3, caractérisé en outre ce que ledit corps (32, 33, 33a) de l'élément (30) comporte deux ouvertures borgnes (44) entre des parties terminales opposées du corps (33, 33a) et au voisinage de la jonction du corps (32) et de ladite tige de montage (40), ces ouvertures étant séparées l'une de l'autre par une âme (45) s'étendant sensiblement parallèlement audit axe longitudinal de l'élément (30).

5. Elément de transmission d'entraînement selon la revendication 4, caractérisé en ce que lesdites ouvertures borgnes (44) sont de forme trapézoïdale.

6. Ensemble de transmission d'entraînement pour convoyeur à rouleaux, comportant une chaîne d'entraînement (15) sur laquelle est monté un ensemble d'éléments de transmission d'entraînement (30) destinés à être en contact avec les rouleaux (12) du convoyeur à rouleaux, chaque élément de transmission d'entraînement (30) étant monté sur un maillon respectif de la chaîne (30), et caractérisé en ce que chaque élément de transmission d'entraînement (30) s'étend dans le sens de la longueur de la chaîne (15) au-delà des extrémités du maillon de celle-ci sur lequel il est monté, la ligne de séparation entre des éléments de transmission d'entraînement voisins (30) s'étendant avec un angle aigu par rapport à la direction de la longueur de la chaîne (15).

7. Ensemble de transmission d'entraînement pour convoyeur à rouleaux selon la revendication 6, caractérisé en ce que chaque élément de transmission d'entraînement (30) comporte un organe d'ancrage (40) situé entre ses extrémités et qui permet de la fixer à ladite chaîne (15).

8. Ensemble de transmission d'entraînement pour convoyeur à rouleaux selon la revendication 6 ou 7, caractérisé en ce que chaque extrémité de chacun desdits éléments de transmission d'entraînement (30) comporte une partie terminale courbée de façon convexe (37).

9. Ensemble de transmission d'entraînement pour convoyeur à rouleaux selon la revendication 7 ou 8, caractérisé en ce que chaque organe d'ancrage (40) fait saillie partiellement à travers ladite chaîne (15) et comporte une extrémité en forme de fourche formant une paire de doigts (42, 42a), qui s'appuient élastiquement autour de parties de ladite chaîne (15).

10. Ensemble de transmission d'entraînement pour convoyeur à rouleaux selon l'une quelconque des revendications 6 à 8, caractérisé en ce que chacun des maillons de la chaîne (15) comporte à chaque extrémité une douille transversale (22) avec une ouverture (23) entre celles-ci, et que chacun des organes d'ancrage (40) s'étend à travers une ouverture respective (23) et comporte une extrémité en forme de fourche formant une paire de doigts (42, 42a) s'étendant en sens contraires, ladite tige (40) étant constituée en un matériau élastique permettant auxdits doigts (42, 42a) d'être fléchis l'un vers l'autre pour passer à travers l'ouverture.

11. Ensemble de transmission d'entraînement pour convoyeur à rouleaux selon l'une quelconque des revendications 6 à 10, caractérisé en ce que chaque élément de transmission d'entraînement (20) comporte une surface d'entraînement (32) à coefficient de frottement élevé destinée à être en contact avec les rouleaux (12) du convoyeur à rouleaux (10), cette surface (32) présentant la forme d'un parallèlogramme oblique, orienté de telle sorte que des éléments voisins (30) se chevauchent mutuellement dans le sens de la longueur de la chaîne (15).

12. Ensemble d'entraînement pour convoyeur à rouleaux selon l'une quelconque des revendications 7 à 11, caractérisé en ce que l'organe d'ancrage (40) de chaque élément (30) est une tige de montage destinée à être insérée dans une ouverture centrale d'un maillon de la chaîne (15), chacun des éléments de transmission d'entraînement (30) comportant une paire d'ouvertures (44) s'étendant latéralement entre les extrémités de l'élément (30) et au voisinage de la jonction du corps (32) et de ladite tige de montage (40), lesdites ouvertures étant borgnes et définissant entre elles une âme (45) s'étendant longitudinalement pour soutenir la surface d'entraînement (31) du patin.

Fig. 1.

Fig. 2.

Fig. 3.

Fig.5.

Fig.6.

Fig.4.

Fig.7.